Europäisches Patentamt

European Patent Office

Office européen des brevets

(11) Publication number: **0 240 805 B1**

# EUROPEAN PATENT SPECIFICATION

(45) Date of publication of patent specification: **11.07.90**

(51) Int. Cl.⁵: **H 04 Q 3/52**

(21) Application number: **87104081.2**

(22) Date of filing: **20.03.87**

(54) Current steering cross-point switch matrix.

<table>
<tr><td>(30) Priority: <b>11.04.86 US 850793</b></td><td>(73) Proprietor: <b>International Business Machines Corporation<br>Old Orchard Road<br>Armonk, N.Y. 10504 (US)</b></td></tr>
<tr><td>(43) Date of publication of application:<br><b>14.10.87 Bulletin 87/42</b></td><td></td></tr>
<tr><td>(45) Publication of the grant of the patent:<br><b>11.07.90 Bulletin 90/28</b></td><td>(72) Inventor: <b>Larsen, Thor Arne<br>17 Niles Drive<br>Woodstock, N.Y. 12498 (US)</b></td></tr>
<tr><td>(84) Designated Contracting States:<br><b>DE FR GB IT</b></td><td>(74) Representative: <b>Ekström, Gösta E.<br>IBM Svenska AB Intellectual Property Department<br>S-163 92 Stockholm (SE)</b></td></tr>
<tr><td>(56) References cited:<br><b>EP-A-0 024 027</b><br><br><b>IBM TECHNICAL DISCLOSURE BULLETIN, vol. 29, no. 1, June 1986, page 137, Armonk, New York, US; "High performance FET crosspoint switch utilizing current steering technique"</b><br><br><b>IBM TECHNICAL DISCLOSURE BULLETIN, vol. 28, no. 12, May 1986, pages 5211-5213, New York, US; "Matrix current steering driver/receiver pair"</b></td><td>(56) References cited:<br><b>IEEE TRANSACTIONS ON CIRCUITS AND SYSTEMS, vol. CAS-27, no. 7, July 1980, pages 626-635, IEEE, New York, US; M. COOPERMAN: "High speed current mode logic for LSI"</b></td></tr>
</table>

Courier Press, Leamington Spa, England.

## Description

The invention relates to electronic switching systems and more particularly to a dynamic cross-point switching matrix using current steering techniques.

A cross-point switching matrix provides for switching and interconnection between data lines or ports. For puposes of description, a port consists of two signal lines, one for receiving data and the other transmitting data. In a cross-point switching matrix, the lines are configured in an orthogonal arrangement of rows and columns. The intersection between a row and column is called a cross-point, and the control switch at each cross-point is designated a cross-point switch. The control switch may comprise a thyristor, a latch, a transistor or a gate, and in turn, is controlled by external control signals. Once a control switch has been activated, the selected input and output lines are connected by a low impedance path, while any non-selected switches present a high impedance path to the row and column to which they are attached. One example of a switching matrix of this type is shown in EPO patent application 841112840 to which reference is made.

While cross-point switches have a long history in the telephone art starting with electro-mechanical stepping and rotary switches, conventional electronic cross-point switches, such as the transistor switches heretofore noted, have several limitations including complex circuitry and high power requirements. A substantial amount of control circuitry is normally required to selectively switch between ports which, in integrated circuitry, requires considerable area on a silicon chip. In addition to the space limitations described above, such cross-point switching circuits consume significant power whether or not they are performing a connection.

EP—A—0 024 027 to Bauch et al discloses, for example, a cross-point switching network comprising a first and second array of orthogonally disposed lines and means for selectively interconnecting a plurality of ports through said first and second array. The interconnecting means comprises integrated circuits including a control switch, said circuits being located one at each intersection of said first and second array. The interconnecting circuits are coupled in such a way so that power consumption is reduced and involve current steering. However, they require considerable area on a silicon chip. It is toward the solution of these problems that the present invention is directed.

The instant invention is directed to a dynamic cross-point switching matrix adapted to selectively interconnect an input to an output port by means of a plurality of identical chips interconnected in a matrix pattern on a ceramic or an organic multi-layer card. A single-sided cross-point switch system requires row-driver and receiver functions, i.e., each port consists of a row-driver plus a row-receiver on separate horizontal axes and steering or connect circuits to the vertical axis. Only one intersection in a given row can be selected at any given time, while a maximum of two switches are required for a selected column. By converting the row drivers to current sources and replacing the cross-point intersections with current steering switches, i.e., transistors, and then re-converting the current to voltage at the row-receivers, the cross-point array has been significantly simplified. Voltage to current and current to voltage conversion is employed to convert the digital input signals to matrix signals, while emitter coupled logic (ECL) circuitry is utilized for high performance operation. Note also that the nature of a current steering array with small voltage excursion, thereby small required capacitance charging currents, result in a very high performance array.

Significant power savings are affected because the only cross-point switches (transistors) that dissipate power are those selected and thereby chip power is significantly reduced, allowing optimum utilization of dense packaging on ceramic or organic cards.

The simplicity of the cross-point switching circuitry allows higher functional density.

The invention, which is defined in the attached claims, is described in detail below with reference to the attached drawings, of which,

Fig. 1 is a schematic diagram of a conventional cross-point switching matrix.

Fig. 2 is a block diagram of the switching network utilized with the present invention.

Fig. 3 is a block diagram of a port to port cross-point switching matrix system.

Fig. 4 is a block diagram of the circuit implementation of the preferred embodiment of the present invention.

Fig. 5 is a circuit schematic of the current steering array, the voltage to current and current to voltage converters.

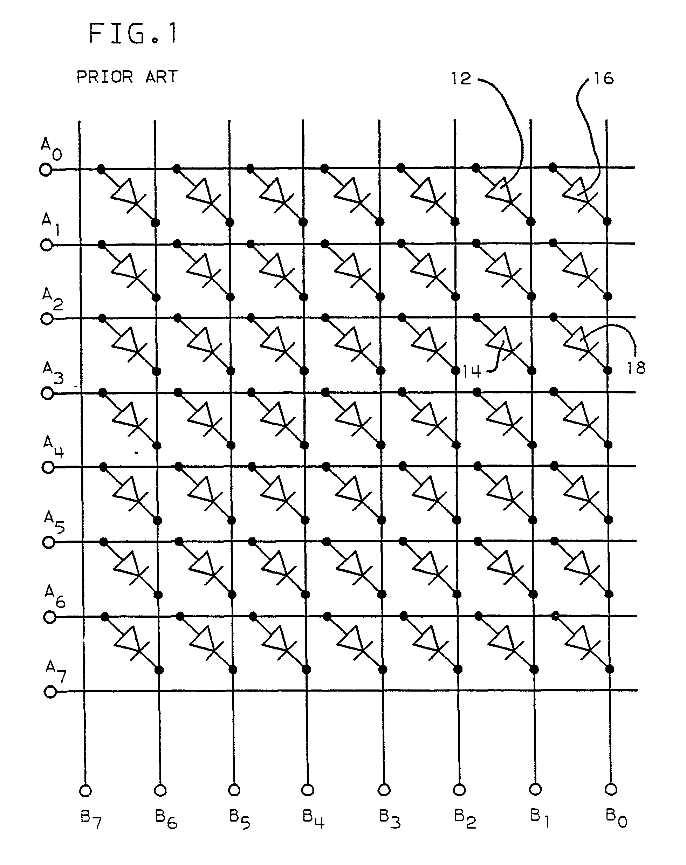

Before proceeding with a detailed description of the present invention, a general description of prior art cross-point switching circuits will assist in an understanding of the instant invention. Referring to Fig. 1, an 8×8 cross-point switching matrix is comprised of horizontal lines or ports $A_0$—$A_7$ and vertical lines or ports $B_0$—$B_7$. At each A/B intersection is located a control switch such as switch 12 between input line $A_0$ output line $B_1$. While disclosed as unidirectional devices or diodes to facilitate an understanding of the cross-point function, the matrix switches in fact comprise thyristors latches, transistors or gates, controlled by external control signals. Once a switch such as switch 12 has been activated, input line $A_0$ is connected to output line $B_1$ by a low impedance path through the switch. On the other hand, any switch which has not been turned on presents a high impedance path. As previously described, the intersection between a row and column is called a cross-point and the associated switch designated a cross-point switch. While a unidirectional cross-point switch is illustrated in Fig. 1, bi-directional switches may also be employed which allows data-flow in both directions. In a full duplex mode, current flow in the pair of conductors comprising a port connection will be opposite directions.

The switch represented in Fig. 1 is known in the art as a two-sided switch, i.e., line on one side of the switch ($A_0$—$A_7$) are connected to lines on the other side of the switch $B_0$—$B_7$. A one sided switch is one in which the columns are not necessarily connected to external lines but serve only for internal connection and serve to interconnect the lines $A_0$—$A_7$ to each other by using conductors $B_0$—$B_7$ as interconnecting lines. For a further description of the prior art and particularly that shown in Fig. 1, reference is made to the aforereferenced EPO application.

The problems associated with cross-point switching matrices such as shown in Fig. 1 have been described, and include circuit complexity, chip area requirements depending on integrated circuit implementation and high power dissipation.

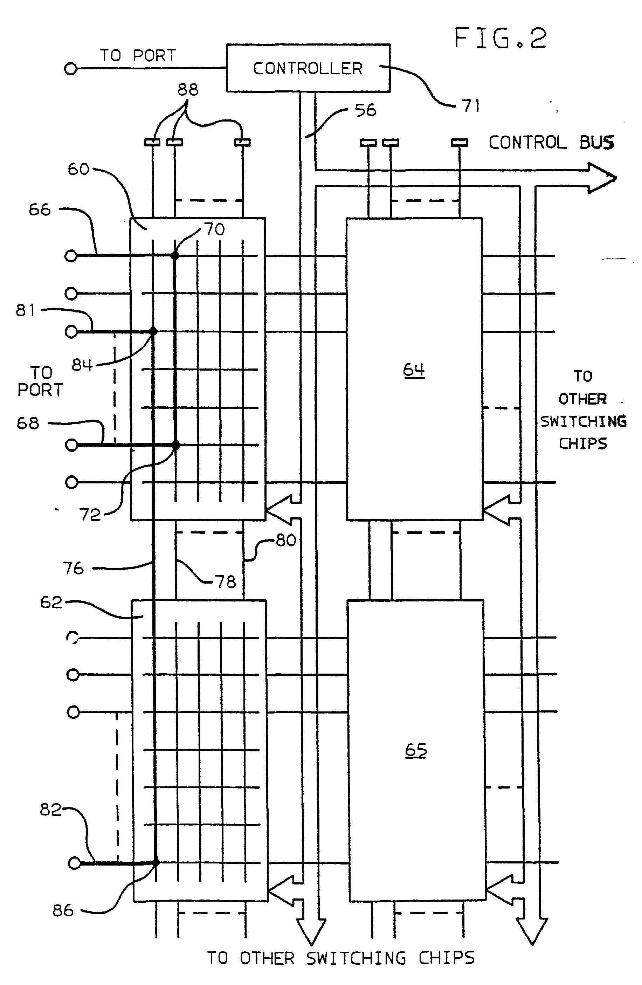

Referring now to Fig. 2, there is illustrated in block schematic form a preferred embodiment of a system implementation of a cross-point switching matrix and its associated controls. An array of switching matrices is formed on four separate chips 60, 62, 64 and 65. If the ports $A_0$—$A_7$ are to be selectively interconnected to ports $B_0$—$B_7$, it is required that individual cross-point switches such as 12, 14, 16, 18 (Fig. 1) be turned on or selected. This is accomplished by means of a control bus 56 which originates, for example, from a controller 71. The purpose of the cross-point switch is to selectively connect any one port to any other port by means of the matrices of identical chips 60, 62, 64 and 65 interconnected in a regular pattern on a ceramic multi-layer card. Alternatively, identical modules could be mounted on an organic card.

As previously described, each port connection consists of two signal lines, one sending and one receiving. Whenever there is a need to go from a horizontal to a vertical path or vice versa, the connections must be made through a chip via the cross-point connections. Thus each port is fully duplexed, while the chip to chip connections consist of a bi-directional driver function.

While the system implementation in Fig. 1 illustrates a square 8×8 cross-point switch matrix for ease of description, it will be appreciated that, in practice, a rectangular matrix having more or less drive lines than columns may be employed. For a one-sided switch with n ports, n/2 columns are required to provide full conductivity between the horizontal data lines. Thus switching matrices 64, 65 are connected to the same rows as matrices 60 and 62 respectively. Only with the above described ratio of ports to columns will the system be non-blocking, so that there will always be cross-points available if all the lines are being used. Typical line configurations per chip would be 16 rows×8 columns per chip, with a packaging density of 32 rows×16 columns for the four chip card package. One advantage of this configuration is that additional switching matrices can be added as required to accommodate system growth. The switching chips 64, 65 can also function as redundancy and/or fault tolerance in matrices 60, 62. For additional details relative to Fig. 2, references is made to the foregoing referenced EPO application.

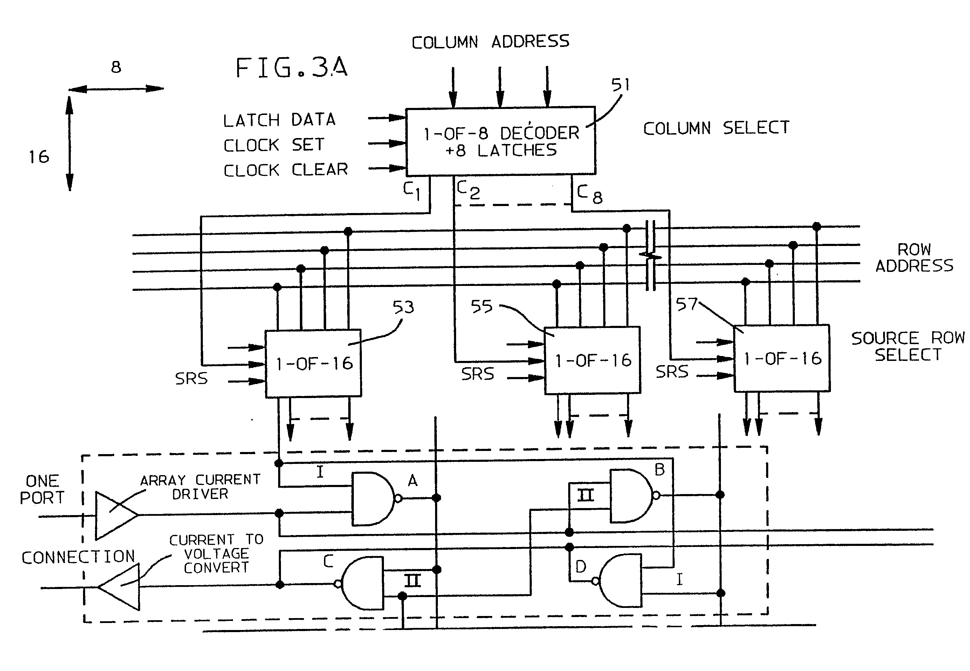

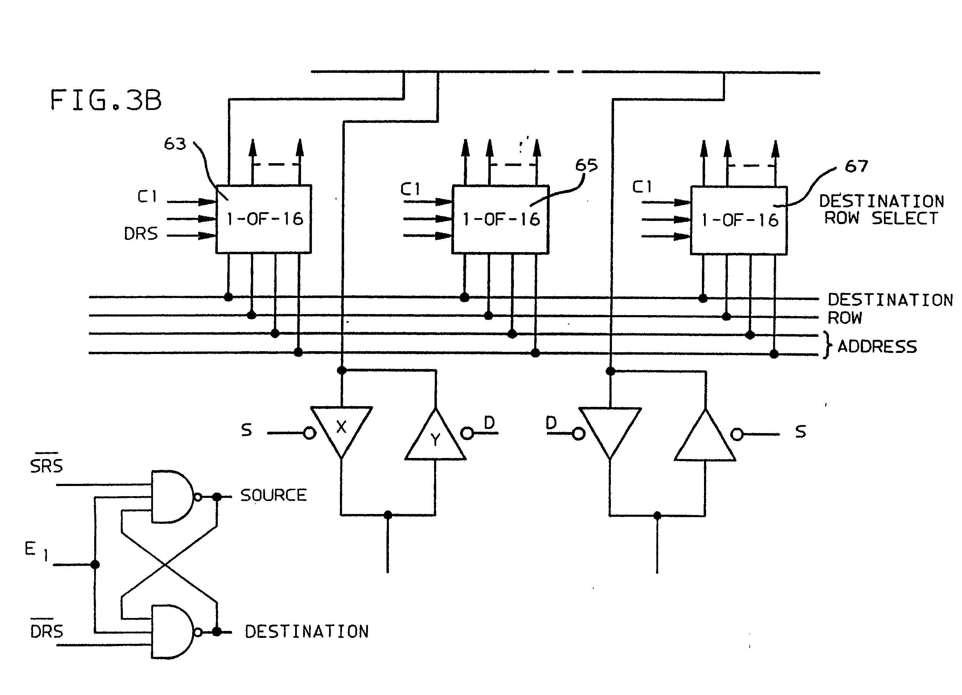

As previously indicated, an aspect of the present invention is to make the row drivers current sources and to replace the X—Y connect circuits with current steering switches, i.e., transistors. Referring to Fig. 3, there is illustrated a block logic diagram of a port to port cross-point switching system. As previously indicated, each port is fully duplexed, i.e., has an incoming and outgoing transmission on separate lines, while the chip to chip connection consists of a bidirectional driver function. Three bit column address signals are applied to column select decoder 51, which selects one of eight outputs $C_1$—$C_8$, each decoder stage having an associated latch. In the embodiment of the invention illustrated in Fig. 3, a configuration of 16 rows and 8 columns for each of 4 chips is employed for a total of 32 rows and 16 columns. Four row address lines are connected to each source row select circuits 53, 55, 57, each of which has 16 outputs. The outputs $C_1$—$C_8$ from the column select decoder 51 select the specific row from the associated row select circuit 53, 55, 57.

While the above described circuitry represents the source address data, four row address lines connected to row select circuits 63, 65, 67 represent the destination address circuitry. The four circuits labeled A, B, C, D perform the function of interconnecting selected rows to a column. These circuits implemented for a conventional high performance application are preferably emitter coupled logic (ECL) and, as such, consume power whether they are performing a connection or not. However, as more fully described hereinafter, they are implemented as current driving and steering circuitry and only the selected switches consume power in the "on" condition.

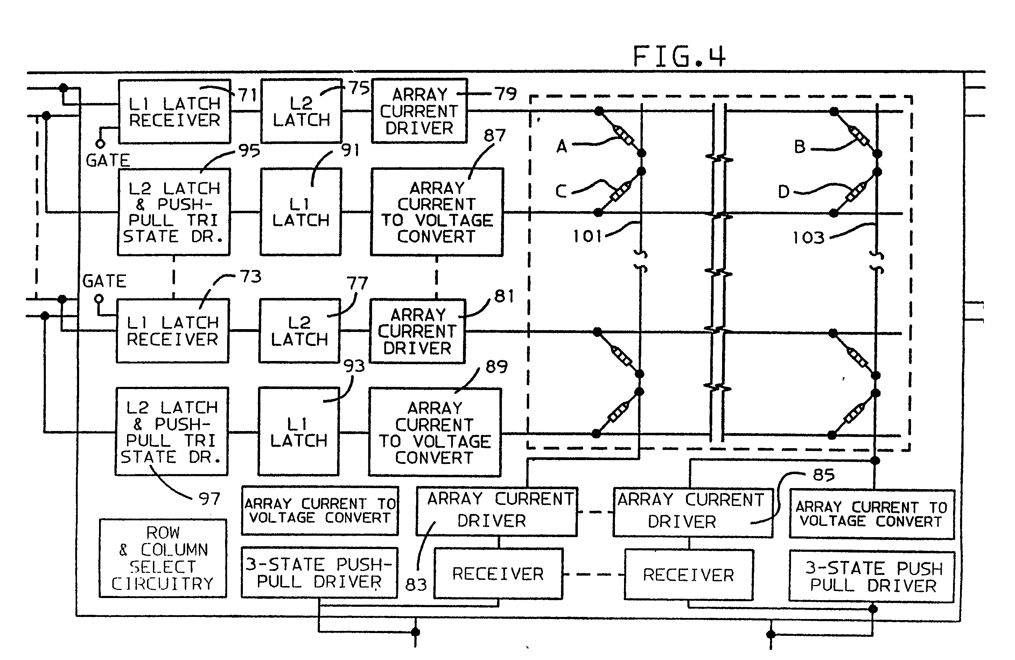

Referring now to Fig. 4, the system concept is illustrated in block schematic form. For purposes of illustration, a 2×2 cross-point matrix is again illustrated, it being appreciated that the remaining connections in the cross-point switch will be of identical construction. As previously described, one of the basic aspects of the instant invention is to make the row drivers current sources and to replace the X Y connect circuits with current steering switches i.e., transistors. Since the invention is designed to operate in a voltage level environment in which both input and output signals are voltage levels, voltage to current and current to voltage conversion circuits are employed to translate the input voltage signals to current form and to retranslate the current into voltage form prior to sending it to the output port.

Returning to Fig. 4, digital input signals which may originate from a port or the like are applied to latch receivers 71 and 73 and are gated by the gate signal to latch circuits 75 and 77 respectively.

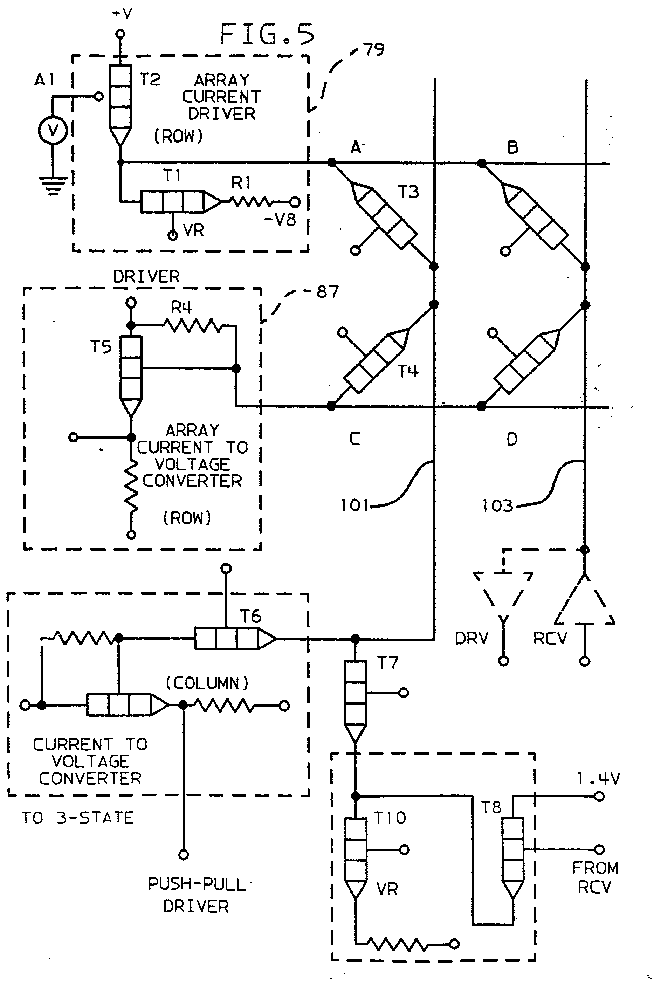

As more fully described hereinafter, the outputs of latches 75 and 77 are applied to array current drivers 79 and 81 which essentially comprises the row drivers' current sources. On the receiving port area illustrated in the lower right portion of Fig. 4, the current signals which originate at array current drivers 79 and 81 are applied through the cross-point switch matrix to current to voltage converter circuits 87 and 89 where they are converted to digital signals then applied through latches 91, 93 to latch push-pull tri-state drivers 95 and 97 respectively as inputs to their associated port. The bus lines associated with driver 95, 97 can be in one of three states, selected up, selected down or providing a high impedance, i.e., essentially floating. Accordingly, tri-state push-pull driver circuits are employed. Similar current drivers, current to voltage converters and push-pull drivers are utilized to form the drive for column lines 101 and 103 respectively. The specific operation of the cross-points with respect to transistors A, B, C and D will be described relative to Fig. 5.

Referring now to Fig. 5, there is illustrated in schematic form details of the cross-point switch matrix chip illustrated in block form in Fig. 4 including details of the current steering matrix. The array or row current driver 79 (Fig. 4) comprises a current source $T_1$ and current steering transistor $T_2$. The collector of $T_2$ is biased at 1.4 volts, and the input signal applied to the base of $T_2$ is the output from the latch circuit 75 in Fig. 4. Assuming port A is to be active, the receiver is gated on, which allows input $A_1$ to change states from an "up" (high voltage) level to a "down" (low voltage) level. A positive input level at $T_1$ keeps the source current flowing through $T_2$ and not through $T_3$ regardless of the input level of $T_3$. When a row connection and a column connection are made, say $T_3$ and $T_4$, both the row and column inputs are high, and all other row connecting devices are kept low as are all other column connections with common nodes to $T_3$ and $T_4$. If the port signal is to propagate to another chip via chip to chip column driver, then transistor $T_6$ is on and $T_4$ is biased off. With the $T_3$, $T_4$ connection, the fall of input to transistor $T_2$ will cause the current through transistor $T_1$ to flow through $T_3$, $T_4$ and resistor $R_4$, dropping the input level to $T_5$ low. This voltage swing is determined by the appropriate selection of values of resistors $R_1$ and $R_4$. The reduced voltage swings at the inputs of the current steering device, are easily created from the standard current switch design by adjusting the current source and collector resistance values. If the signal propagation path is from the column receiver to the port adapter via transistor $T_4$, then the port array driver as well as $T_3$ is gated off. $T_7$ is biased on and with the transition of state of $T_8$, current flow through $T_7$ and $T_4$ similarly changes state. This design approach, i.e., current steering, is only possible for applications where there is only ONE current steering switch selected on any one row at a time, and a maximum of two cross-points selected on a column.

Note that the only time the cross-point draws power is when it is on, and instead of being a complex current switch circuit, it is only a device. The circuitry used to implement this function is known in the art as a cascode circuit. The voltage levels to the two X/Y current steering switches in series must be adequately separated to ensure that neither device goes into saturation. Accordingly, the voltage swings at the bases of the steering transistors are reduced to 200—350 mv from the standard 800 mv ECL swing. The reduced voltage swing is permissible since the reference device, the device that shares the common emitter connection, is driven in the opposite direction. In net, the voltage differential of any two devices sharing a common emitter connection, one "on" and one "off" is ±400 mv, which is the same differential as a standard current switch when the input is ±800 mv and the reference is ground.

The power saving from the above described cross-point network is dramatic. Using the master slice approach of 4 gates per cross-point in switches of the prior art, a 16×8 array would require 512 gates. At the standard 7.5 milliwatts per gate, such an array would dissipate 3.8 watts. With the current steering approach utilized in the present invention, the power level of the array is approximately 800 milliwatts divided as follows. The current drivers would utilize 380 milliwatts, the voltage current converter 320 milliwatts and the array devices 100 milliwatts for a total of approximately 800 milliwatts. The reduction in power is even more dramatic for the 32×8 configuration. With the standard master slice approach, the matrix would dissipate 7.6 watts; with current steering less than 1.2 watts would be dissipated, a power savings greater than 600%.

There is a potential problem of high frequency instability associated with the current steering devices due to the capacitance load on the emitter (the multiple devices). This potential problem is easily remedied by a series resistance in the bases. Performance impact is only of concern with the current driver, but the impact, if any, should be minor. In summary, by the use of current drivers and current to voltage array receivers and the use of devices as cross-point switches dramatically reduces the power, significantly increases the density and improves the performance over the conventional implementation.

**Claims**

1. A cross-point switching network comprising, in combination:
a plurality of cross-point switching matrices (60, 62, 64, 65),
each of said switching matrices comprising a first and a second array of orthogonally disposed lines (A0—A7; B0—B7), and
means for selectively interconnecting a plurality of ports through said first and second array including port conductors and bi-directional driving circuits (79, 81) and a control switch (A, B, C, D) located at each intersection of said first and second arrays,

characterized in that

said driving circuits comprise a single cascode-like series circuit (79, 81) for each row functioning as a current source, and

current to voltage circuits are coupled between said ports and said first array,

said control switches function as current steering devices between selected ports.

2. A switching network as defined in claim 1 wherein said first array is for transmission and reception between ports and said second array completes the interconnections between port conductors.

3. A switching network as defined in claim 1 wherein said switching matrices are formed on a plurality of identical silicon chips, further including chip-to-chip interconnection means.

4. A switching network as defined in claim 4 wherein said chip-to-chip interconnection means comprises a bidirectional driver function.

5. A switching network as defined in claim 1 wherein each of said external ports operates in a full duplex mode.

**Patentansprüche**

1. Schaltmatrixnetzwerk, das in Kombination aufweist:

eine Mehrzahl von Schaltmatrizen (60, 62, 64, 65), wobei jede der Schaltmatrizen aus einer ersten und einer zweiten Gruppierung von orthogonal angeordneten Leitungen (A0—A7; B0—B7) besteht,

Mittel zum selektiven Zusammenschalten einer Mehrzahl von Anschlüssen durch die este und zweite Gruppierung einschließlich Anschlußleiter und bidirektionale Treiberschaltungen (79, 81) und einen Steuerschalter (A, B, C, D), der an jeden Schnittpunkt der ersten und zweiten Gruppierung gelegen ist,

dadurch gekennzeichnet, daß

die Treiberschaltungen einen einzigen, kaskadartigen Serienschaltkreis (79, 81) für jede Reihe aufweisen, der als Stromquelle arbeitet und Strom-zu-Spannung Schaltkreise zwischen den Anschlüssen und der ersten Gruppierung angekoppelt sind, wobei die Steuerschalter als stromlenkende Einrichtungen zwischen ausgewählten Anschlüssen arbeiten.

2. Schaltnetzweck nach Anspruch 1, bei welchem die erste Gruppierung zum Übertragen und Empfangen zwischen Anschlüssen vorgesehen ist und die zweite Gruppierung die Zusammenschaltungen zwischen den Anschlußleitern vollendet.

3. Schaltnetzwerk nach Anspruch 1, bei welchem die Schaltmatrizen auf einer Mehrzahl von identischen Siliziumchips ausgebildet sind, das ferner Mittel zum chip-zu-chip Zusammenschalten aufweist.

4. Schaltnetzwerk nach Anspruch 4, bei welchem die Mittel zum chip-zu-chip Zusammenschalten eine bidirektionale Treiberfunktion aufweisen.

5. Schaltnetzwerk nach Anspruch 1, bei welchem jeder der externen Anschlüsse in einem Vollduplexmodus arbeitet.

**Revendications**

1. Réseau de commutation à points de couplage, comprenant, en combinaison:

une pluralité de matrices de commutation à points de couplage (60, 62, 64, 65),

chacune desdites matrices de commutation comprenant des premier et second réseaux de lignes orthogonales (A0—A7; B0—B7), et

des moyens pour interconnecter de façon sélective une pluralité de points d'accès au moyen desdits premier et second réseaux incluant des conducteurs de points d'accès et des circuits de commande bidirectionnelle (79, 80) et un interrupteur de commande (A, B, C, D) situé au niveau de chaque intersection desdits premier et second réseaux,

caractérisé en ce que

lesdits circuits de commande comprennent un seul circuit série de type cascode (79, 81) prévu pour chaque ligne et fonctionnant en tant que source de courant, et

des circuits courant-tension sont branchés entre lesdits points d'accès et ledit premier réseau, et

lesdits interrupteurs de commande fonctionnent en tant que dispositifs de pilotage du courant entre des points d'accès sélectionnés.

2. Réseau de commutation selon la revendication 1, dans lequel ledit premier réseau est prévu pour l'émission et la réception entre des points d'accès et ledit second réseau complète les interconnexions entre des conducteurs de points d'accès.

3. Réseau de commutation selon la revendication 1, dans lequel lesdites matrices de commutation sont formées sur une pluralité de microplaquettes en silicium identiques, incluant en outre des moyens d'interconnexion entre microplaquettes.

4. Réseau de commutation selon la revendication 4, dans lequel lesdits moyens d'interconnexion entre microplaquettes comprennent une fonction d'étage d'attaque bidirectionnelle.

5. Réseau de commutation selon la revendication 1, dans lequel chacun desdit points d'accès extérieurs fonctionne selon un mode en duplex total.

# FIG.1

PRIOR ART

FIG.2

EP 0 240 805 B1

TO OTHER SWITCHING CHIPS

FIG. 3A

COLUMN ADDRESS

LATCH DATA
CLOCK SET
CLOCK CLEAR

1-OF-8 DECODER
+8 LATCHES

51

COLUMN SELECT

$C_1$  $C_2$  $C_8$

ROW
ADDRESS

53    55    57

SRS    1-OF-16    SRS    1-OF-16    SRS    1-OF-16

SOURCE ROW
SELECT

ONE
PORT

ARRAY CURRENT
DRIVER

I    A    B    II

CONNECTION

CURRENT TO
VOLTAGE
CONVERT

C    II    D    I

EP 0 240 805 B1

FIG.3B

DESTINATION ROW SELECT

DESTINATION ROW

} ADDRESS

# FIG.4

EP 0 240 805 B1

FIG.5